# EUROPEAN PATENT APPLICATION

(11) **EP 2 391 147 A1**
(43) Date of publication of application: **30.11.2011**
(21) Application number: 09838651.9
(22) Date of filing: 09.09.2009
(51) Int. Cl.: H04W 4/14

(54) **A SERVICE SYSTEM FOR STORING SHORT MESSAGES AND A METHOD FOR STORING SHORT MESSAGE SERVICE THEREOF**

(30) Priority: 20.01.2009 CN 200910105174
(71) Applicant: ZTE Corporation, Shenzhen, Guangdong 518057 (CN)
(72) Inventor: WANG, Changzheng, Shenzhen Guangdong 518057 (CN); LV, Weichu, Shenzhen Guangdong 518057 (CN)
(74) Representative: Gervasi, Gemma
(86) International application number: PCT/CN2009/073839
(87) International publication number: WO 2010/083684

(57) **Abstract**

A service system for storing short messages and a method for storing short message service thereof are provided. The method comprises the following steps: a short message service center (SMSC) receives a short message transmitted/received by a user via a mobile telephone; the SMSC judges whether the user belongs to the service system for storing short messages or not, and forwards the short message of the user belonging to the service system for storing short messages to the service system for storing short messages via a short message value-added service platform; the service system for storing short messages saves short messages transmitted/received by the user. The above method and system solve the problem that the number of the short messages stored by the mobile telephone is limited.

## Description

### Technical Field

The present invention relates to short message value-added service and method thereof in the field of communication technology, and more especially, to a service system for storing short messages and a method for storing short message service based on a new value-added service platform.

### Background of the Related Art

In the prior art, the short message value-added service refers to the value-added service that takes short messages as carriers and is implemented by the existing short message system, such as classifying and managing the short messages and so on. At present, the conventional short message value-added service generally uses a service provider (SP) service platform to provide services for users by a mode of the service code assigned by the operator accessing the short message gateway, this mode, however, requires the users to send short messages to the designated service code when using the service, which brings inconvenience to the users; when the SP interactive interface, the SP information or the configuration information changes, it affects the short message service center (SMSC), which is contrary to the operator's original intention of guaranteeing the stable operation of the short message center; Moreover, since the SP is not managed irregularly, the ministry of information industry requires the operators gradually limit the development of this SP.

Currently, the national operators use a new value-added service solution, and in this solution, a value-added service logic control processing network element located behind the SMSC is to provide relevant functions for users such as value-added service acceptance and service application process control, and to provide service support when a user subscribes several value-added services. On the premise of not changing the user's point to point using habit, that is, in the process of a user regularly sending a point-to-point message, the short message value-added service system can automatically provides the value-added service for the user.

Using the conventional mobile phone terminal to save short messages has the following disadvantages: squandering time and vigor for saving short messages; lacking intelligent management and classification so it is not easy to search; with the increasing number of the short messages, the space for saving short messages in the mobile phone is increasingly tight and the response speed of mobile phone is affected since a lot of system resources are occupied. People are always concerned about whether to set up a platform for saving and managing short messages and a method for storing short messages thereof, and on the premise of not affecting the user's point to point using habit, to effectively solve the problem that the number of short messages stored by mobile phone terminals is limited and to implement flexible short message management, and to provide a long term storage space for terminal users, and to help the users record the life experience and the growth process; to recall the families' warmness and friends' care and so on, and to guide the operators to provide the short message value-added service for the users.

In the prior art, there are some operators trying to implement one kind of short message warehouse technology, but the implementation of this technology is implemented via the short message service center or the short message value-added service platform, and since the short message service center or the short message value-added service platform itself has a lot of service requests to be processed, when it is further used to implement the long-term storage of short messages, the storage capacity is easily limited, moreover, since its bandwidth is limited, it is very possible that the performance of the short message service center or the short message value-added service platform is affected due to processing short messages stored by users, which causes that resources of the short message service center or the short message value-added service platform are limited and data transmission is congested, thus quality of the service of the operator declines.

Therefore, the prior art is yet to be developed.

### Summary of the Invention

The purpose of the present invention is to provide a service system for storing short messages and a method for storing short message service thereof, the method and system can effectively solve the problem that the number of short messages stored by the mobile phone terminal is limited, and real-time back up short messages transmitted/received by the user.

The technical scheme used in the present invention to solve the abovementioned technical problem is:
a method for storing short message service comprises the following steps of:
   a short message service center receiving a short message transmitted/received by a user via a mobile phone terminal;
   the short message service center judging whether the user belongs to a service system for storage or not, and forwarding the short message of the user belonging to the service system for storage to a service system for storing short messages via a short message value-added service platform; and
   said service system for storing short messages saving the short message forwarded by said short message service center.

Furthermore, before the step of the short message service center receiving the short message transmitted/received by the user via the mobile phone terminal, the method also comprises: accepting user information according to a request of user to determine whether the user belongs to the said service system for storage or not, and if yes, setting user attribute in said service system for storing short messages.

Furthermore, in the method: the step of setting the user attribute comprises at least one of the followings: setting the time length of storing the short message; setting the specific time period of storing the short message; and setting whether to continue sending the saved short message to the mobile phone terminal or not.

Furthermore, in said method: when setting that said service system for storing short messages continue sending the short message to a called mobile phone terminal, the step of said service system for storing short messages saving the short message forwarded by said short message service center comprises:
said service system for storing short messages taking the information data of the short message as the temporary data to save into memory, and sending the short message to said short message service center;
the short message service center sending the short message to the called mobile phone terminal;
the called phone terminal returning a response message to the short message service center;
the short message service center delivering a state report message of the called mobile phone terminal receiving short messages to the service system for storing short messages;
the service system for storing short messages acquiring said temporary data from said memory, and saving the temporary data, along with sending result information in the state report message, into a database module in the service system for storing short messages;
the service system for storing short messages delivering the state report message to the short message service center;
the short message service center returning a response message.

Furthermore, said method also comprises:
said service system for storing short messages sending a notification message;
the short message service center returning a response message to the service system for storing short messages;
the short message service center sending said notification message to a terminal user;
the terminal user returning the response message to the short message center, and ending process.

Furthermore, the method also comprises: the user managing the short messages saved in the service system for storing short messages in the portal website at the Web side via the following steps of:
a user computer initiating a search request to WEB application server via Internet;
the Web application server sending a search for user data to the service system for storing short messages;
the service system for storing short messages returning the user data to the Web application server;
the Web application server returns related information of user to the user so that the user can operate the short message.

Furthermore, in the method, the step of operating short messages comprises classifying, forwarding, deleting, downloading and/or modifying the short messages saved in the service system for storing short messages.

The present invention also provides a service system for storing short messages, and the service system for storing short messages is configured to access a short message system, and to receive and process user requests, and to synchronously save and manage the short messages transmitted/received by user, wherein,
said short message system comprises a mobile phone terminal, a short message service center, a short message gateway, and a short message value-added service platform; said short message value-added service platform has a communication connection with the short message service center and the short message gateway, and provides short message processing and value-added service thereof;
said service system for storing short messages is configured to have a communication connection with said short message value-added service platform;
furthermore, said service system for storing short messages comprises a protocol gateway module, a user acceptance module, a service control module and a database module, and said database module is used to provide storage space;
said protocol gateway module is configured to have a communication connection with said short message service center and the short message gateway respectively via the short message value-added service platform, and to encode and decode the short messages;
said user acceptance module is configured to be connected with said protocol gateway module and the database module respectively, and to accept user requests, and to add, delete, modify and search the user information and attribute by interacting with said database module;
said service control module is configured to be connected with said protocol gateway module and the database module respectively, and to accept user indications, authenticate the user by operating said database module, save the user information data, and search and match the information data.

Furthermore, said service system for storing short messages also comprises a Web application module, and said Web application module is configured to be connected with said user acceptance module, the service control module and the database module respectively, and to accept the operation request sent by the user via the Web application server, and deliver the operation request of user to the user acceptance module and the service control module, and implement searching, classifying, forwarding, deleting, downloading and modifying the information data in the database module.

The beneficial effects of the present invention are that: since adding a service system for storing short messages and the service system for storing short messages works with a new value-added service platform together, on the premise of not affecting the user's point to point using habit, the present invention effectively solves the problem that the number of short messages stored by the mobile phone terminal is limited, provides a long-term storage space for terminal users, synchronously backs up the short messages transmitted/received by the users in real time, and helps the users to conveniently manage short messages, and provides enriched value-added services for users by flexibly combining a variety of configurations.

### Brief Description of Drawings

FIG. 1 is a networking schematic diagram of the service system for storing short messages in the present invention;
FIG. 2 is a schematic diagram of the module composition of the service system for storing short messages in the present invention;
FIG. 3 is a schematic diagram of the process of storing short messages service in the present invention.

### Preferred Embodiments of the Present Invention

The embodiments of the present invention will be further illustrated in detail in combination with the accompanying figures below.

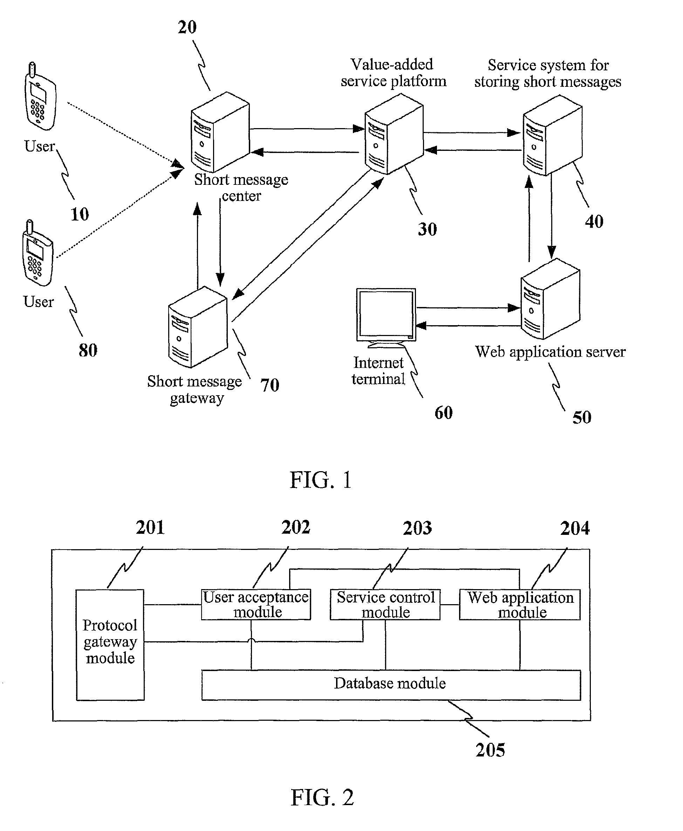

The present invention provides a service system for storing short messages based on a new value-added service platform, and the networking system having the short message service storage function and formed by the service system for storing short messages is shown in FIG. 1, and the service system for storing short messages 40 has a communication connection with a short message system, and said short message system comprises the mobile phone terminals 10 and 80, the short message service center 20, the short message gateway 70, and the short message value-added service platform 30, and the function of each network element in networking diagram is introduced as follows:

The mobile phone terminals (mobile station) 10 and 80 are the short message senders and system users in the service system for storing short messages, and they connect with network elements such as the short message service center and so on via the air interface, and the connection technology is known in the prior art and its description is omitted here.

The short message service center 20 is a core network element in the point to point short message, and it is connected with the new value-added service platform, and after the short message service center 20 receives the mobile original (MO) message sent by the mobile station 10, it delivers the message to the short message value-added service platform (the service system for storing short messages) and can accept the request message sent from the service system for storing short messages.

The short message value-added service platform 30 is the new value-added service platform which is used by the operator currently, and by this platform, a variety of value-added services can be extended conveniently to improve the deployment efficiency and reduce the information interaction between the network elements.

The service system for storing short messages 40 is a core device to implement short message storage service, and it is the core inventive point in the present invention and is used to receive and process user requests, provide acceptance service for users, save user information data, back up and manage the short message transmitted or received by the corresponding user synchronously, and control the specific implementation process of the service.

Meanwhile, the service system for storing short messages is also used to accept a request sent by the user via the Web application server, and to deliver the user request to the user acceptance module and the service control module to provide operations such as Web search with data resource, and search, classify, forward, delete, download and modify the information data in the database module.

The service system for storing short messages 40 might be an individual function entity or an internal module set in the short message value-added service platform, and when the service system for storing short messages 40 is an individual function entity, it communicates with the short message value-added service platform 30 via the extended SMPP protocol; when the service system for storing short messages 40 is a module set in the short message value-added service platform 30, it communicates with the short message value-added service platform 30 via the internal communication mechanism. The service system for storing short messages has an individual storage unit to store massive short messages and to access the Internet.

The Web application server 50 provides a way of searching and managing short messages via the Web for users, and the data in the server is acquired from the service system for storing short messages 40 network element. The implementation of said Web application server 50 connecting with said service system for storing short messages 40 is known in the prior art and will not be illustrated here.

The user computer 60 connects with the Web application server 50 via the Internet, and the user can log in via the user computer 60 to perform all kinds of operations, such as searching, deleting or forwarding the stored short messages and so on, since the service system for storing short messages 40 implements the user operations via the Web application server 50, which will not occupy the bandwidth of the short message service center or the short message value-added service platform, it maintains the stability of the short message system and improves the user operation efficiency and enhances user experience.

The short message gateway 70 might receive messages from the short message value-added service platform 30, for example, sending a notification message such as that the user storage space is almost full to the user mobile phone terminal, or accept user command messages and configure the services.

The service system for storing short messages 40 in the present invention is shown in FIG. 2, and the system comprises the following modules:
the protocol gateway module 201, which is an external interface of the service system for storing short messages 40 and is responsible for communicating with other network elements including the short message service center (SMSC) and the short message gateway (GW) and so on, and encoding and decoding the message.

The acceptance module 202 in the service system for storing short messages connects with the protocol gateway module 201 and the database module 205 respectively, and adds, deletes, modifies and searches user information and user attribute by interacting with the database module 205, and it is specifically responsible for opening an account, cancel an account, suspending an account and activating an account for user and so on; configuration of the user attributes comprises one or more of: the time period of storing short messages, whether to send the stored short messages or not, the time length of storing the short message and so on; and searching user information and so on.

The service control module 203 in the service system for storing short messages connects with the protocol gateway module 201 and the database module 205 respectively, and is used to according to the user request, authenticate a user by operating the database module 205, save the user information data and so on, and it is also used to search and match the information data. After said service control module 203 accepts a message from the short message service center 20, it performs the service logic control via the module to implement the specific function of short message storage service, such as saving the received short messages, saving the sent short messages and uploading the short messages and so on; parts of request operation from the Web side is also processed by the module.

The Web application module 204 in the service system for storing short messages in the present invention connect with the user acceptance module 202, the service control module 203 and the database module 205 respectively, and it provides management function in the form of Web for users. This module is used to accept a request sent by the user via the Web application server 50, and to deliver the user request to the user acceptance module 202 and the service control module 203 to search, classify, forward, delete, download and modify the information data in said database module 205, and the user is able to search, forward, delete, download and modify the saved short messages via the Web application server.

The database module 205 in the service system for storing short message in the present invention is used to provide individual storage space, and it is the core link for the interaction between various modules, and each module operates the database. The user acceptance module 202 adds, deletes, modifies and searches the user information and user attribute according to the user request; the service control module 203 authenticates the user and searches and matches the information via the database; the Web application module 204 carries out operations such as deleting, modifying, searching and so on for the short message content saved in the database according to the user request.

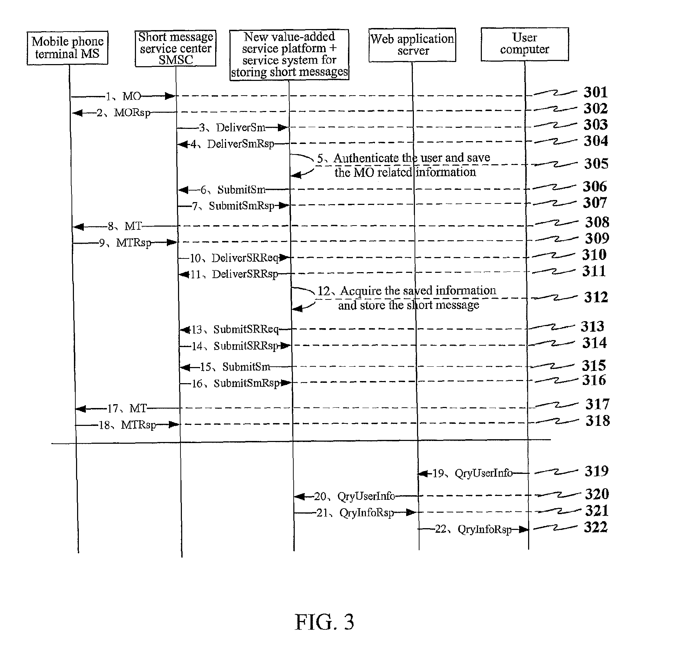

The method process of storing short messages service in the present invention is shown in FIG. 3, and it comprises the following steps:
before processing the following steps, setting the user attribute in the service system for storing short messages 40 according to the user request, and setting the user attribute comprises: setting the time length of storing the short message; setting the designated time period of storing the short messages; setting whether to continue sending the stored short message to the mobile phone terminal or not; and downloading the short message export file to the local and so on.
301. The user A initiates a regular point to point message to the short message service center 20 via the mobile phone terminal 10.
302. The short message service center 20 returns a response message to the user.
303. The short message service center 20 judges whether the user belongs to the service system for storing short messages or not. Since the short message service center 20 also has a database, when a user in the service system for storing short messages opens an account, the information will be sent synchronously to the short message service center 20, thus the short message service center 20 also has the user record in the service system for storing short messages. After a short message arrives at the short message service center 20, the short message service center 20 will carry out a matching and recording operation in its own database, and further judges whether the user belongs to the service system for storing short messages or not. When the short message service center 20 judges that the user belongs to the service system for storing short messages, it forwards the short message to the service system for storing short messages 40, and proceed to step 304; if it judges that the user does not belong to the service system for storing short messages, proceed to step 308 and step 309, and then the process is ended.
304. The service system for storing short messages 40 returns a response message to the short message center.
305. The service system for storing short messages 40 saves the specific information of the MO message and saves it into the temporary memory in the service system for storing short messages 40; determines the subsequent process according to the attribute set by the user that whether to continue sending the message to the called mobile phone terminal 80, that is, user B, and if yes, proceed to step 306, otherwise, proceed to step 312.
306. The service system for storing short message 40 sends the original short message sent by user A to the short message service center 20.
307. The short message service center 20 returns a response message.
308. The short message service center 20 sends said short message to the called mobile phone terminal 80.
309. The called side returns a response message to the short message service center 20.
310. The short message service center 20 delivers the state report message of the MT (mobile terminate) message to the service system for storing short messages 40 of the short message value-added service platform, and the state report message comprises information such as the short message sent successful or unsuccessful and so on.
311. The service system for storing short messages 40 returns a response message to the short message service center 20.
312. The service system for storing short messages 40 acquires the temporary information of the original short message saved in operation of step 305 from the temporary memory and deletes the temporary information after the acquisition, and combines the sending result information in the state report message and the temporary information to form the complete information including the content of the original short message, the short message sender's number, the sending time, and whether the sending is successful or not and so on, and saves the complete information into the database module in the service system for storing short messages 40. Moreover, after the user's saved short messages reach to a certain number, the service system for storing short messages 40 can correspondingly remind the user via a short message.
313. The service system for storing short messages 40 delivers a state report message to the short message service center 20 regarding the original short message sent by the user A so that the short message service center 20 determines whether to charge or not.
314. The short message service center 20 returns a state report response message.

If the service system for storing short messages 40 has a notification message, for example, reminding user after saved user's short messages reach to a certain number, as shown in FIG. 3, the following steps should be performed:
315. The service system for storing short messages 40 sends a notification message to the user.
316. The short message service center 20 returns a response message to the service system for storing short messages 40.
317. The short message service center 20 sends a notification message to the terminal user.
318. The user terminal returns a response message to the short message service center 20, and the process is ended.

When a user operates his/her short messages saved in the service system for storing short messages via the portal website on Web side, the process is as follows:
319. The user computer initiates a search request to the Web application server 50 via the Internet.
320. The Web application server 50 sends a search for the user data to the service system for storing short messages 40.
321. The service system for storing short messages 40 returns the user data to the Web application server 50.
322. The Web application server 50 returns the related information of user to the user for the user's operation.

By using the service system for storing short messages and the method for storing the short message service in the present invention, the following main functions might be implemented:
(1) Outbox: the short messages sent by the user in the service system for storing short messages to other users are saved, and the short messages include information such as the called number, the sending state and the sending time and so on.
(2) Inbox: when the user in the service system for storing short messages receives a short message sent by other user (including SP), the information will be saved in the inbox, meanwhile the information, such as the short message sender and the sending time and so on, will be saved.
(3) Automatic upload box: when the user in the service system for storing short messages has short message creation inspiration, he/she edits a short message and uploads it to the service system for storing short messages, and forwards the message via the management and operation of the Web site to improve the transmission efficiency, which is especially suitable for the situation of sending massive blessing short messages during the holidays.
(4) Download and forward functions: for all kinds of short messages saved by the user in the service system for storing short messages, the user can download the short messages to his/her mobile phone terminal via the Web side, and also forward them to friends' mobile phone terminals, especially suitable for forwarding the blessing short messages during holidays.
(5) User attribute configuration: the users can set the time length of saving various kinds of short messages; set the designated time period of storage, not carrying out storage in other time period; set whether to continue sending the saved short messages to the mobile phone terminal or not, so as to functioning as blocking the short messages; moreover, permanently store the meaningful short messages; and download the short message export file to the local.
(6) User portal operation: The user conveniently manages the saved short messages via the Web browser, and carries out operations such as searching, classifying, downloading and deleting and so on via the Web browser.

The method and system for storing short messages based on the new value-added service platform in the present invention effectively solve the problem that the number of short messages stored in the mobile phone terminal is limited on the premise of not affecting the user's point to point using habit, and provide a long-term storage space for the terminal users and synchronously back up the short messages transmitted/received by the users in real time; the service scheme provided in the present invention can save massive short messages at the network side for users with no need to use an individual interface to the short message service center, thus it has a very good promotion effect and highly universality.

Meanwhile, the present invention can help users to conveniently manage short messages, and it combines flexibly a variety of configurations to provide enriched services for users, and implements personalized requirements of users, thus it is very attractive to the users and is a highly potential value-added service, and it is able to attract more and more users to enjoy the short message value-added service.

It should be understood that, for those skilled in the art, equivalent replacements or changes can be made according to the technical scheme and inventive concept in the present invention, and all these replacements or changes should belong to the protection scope of the appended claims in the present invention.

### Industrial Applicability

The present invention can help users to conveniently manage short messages, and it combines flexibly a variety of configurations to provide enriched services for users, and implements personalized requirements of users, thus it is very attractive to the users and is a highly potential value-added service, and it is able to attract more and more users to enjoy the short message value-added service.

## Claims

1. A method for storing short message service, and the method comprising following steps of:
a short message service center receiving a short message transmitted/received by a user via a mobile phone terminal;
the short message service center judging whether the user belongs to a service system for storage or not, and if yes, forwarding the received short message to a service system for storing short messages via a short message value-added service platform; and
said service system for storing short messages saving the short message forwarded by said short message service center.

2. The method of claim 1, before the step of the short message service center receiving the short message transmitted/received by the user via the mobile phone terminal, the method also comprising:
accepting user information according to a request of user to determine whether the user sending the request belongs to said service system for storage or not, and if yes, setting user attribute for the user in said service system for storing short messages.

3. The method of claim 2, wherein, the step of setting the user attribute comprises at least one of following steps of:
setting a time length of storing the short message;
setting a time period of storing the short message;
setting whether to continue sending the saved short message to the mobile phone terminal or not.

4. The method of claim 3, wherein, when setting that the saved short message is continued to be sent to the mobile phone terminal, the step of said service system for storing short messages saving the short message forwarded by said short message service center comprises:
said service system for storing short messages taking information data of the short message forward by said short message service center as temporary data to be saved into memory, and sending the short message to said short message service center;
the short message service center sending the received short message to a called mobile phone terminal;
the called mobile phone terminal returning a response message to the short message service center;
the short message service center delivering a state report message of the called mobile phone terminal receiving the short message to the service system for storing short messages;
the service system for storing short messages acquiring said temporary data from said memory, and saving the temporary data along with sending result information in the state report message into a database module in the service system for storing short messages;
the service system for storing short messages delivering the state report message to the short message service center; and
the short message service center returning the response message.

5. The method of claim 1, wherein, said method also comprises:
said service system for storing short messages sending a notification message;
the short message service center returning a response message to the service system for storing short messages;
the short message service center sending said notification message to a terminal user; and
the terminal user returning the response message to the short message service center, and the process being ended.

6. The method of any one of claims 1 to 5, the method also comprising: the user managing short messages saved in the service system for storing short messages in a portal website at the Web side via following steps of:
a user computer initiating a search request to a Web application server via Internet;
the Web application server sending a search for user data to the service system for storing short messages;
the service system for storing short messages returning the user data to the Web application server; and
the Web application server returning related information of the user so that the user can operate short messages.

7. The method of claim 6, wherein, the step of operating short messages comprises classifying, forwarding, deleting, downloading and/or modifying the short messages saved in the service system for storing short messages.

8. A service system for storing short messages, the service system for storing short messages being configured to access a short message system, and to receive and process user requests, and to synchronously save and manage a short message transmitted/received by a user, wherein,
said short message system comprises a short message service center, a short message gateway, and a short message value-added service platform; said short message value-added service platform has a communication connection with the short message service center and the short message gateway, and provides short message processing and value-added service thereof;
said service system for storing short messages is configured to has a communication connection with said short message value-added service platform.

9. The service system for storing short messages of claim 8, said service system for storing short messages comprising a protocol gateway module, a user acceptance module, a service control module and a database module, wherein,
said database module is configured to provide storage space;
said protocol gateway module is configured to has a communication connection with said short message service center and the short message gateway respectively via the short message value-added service platform, and to encode and decode short messages;
said user acceptance module is configured to be connected with said protocol gateway module and the database module respectively, and to accept the user requests, and to add, delete, modify and search user information and attribute by interacting with said database module;
said service control module is configured to be connected with said protocol gateway module and the database module respectively, and to accept user indications, authenticate the user by operating said database module, save user information data, and search and match information data.

10. The service system for storing short messages of claim 9, said service system for storing short messages also comprising a Web application module, wherein,
said Web application module is configured to be connected with said user acceptance module, the service control module and the database module respectively, and to accept an operation request sent by the user via a Web application server, and to deliver the operation request of the user to the user acceptance module and the service control module, and to implement searching, classifying, forwarding, deleting, downloading and modifying the information data in the database module.
